# EUROPEAN PATENT APPLICATION

(11) **EP 4 645 543 A1**
(43) Date of publication of application: **05.11.2025**
(21) Application number: 24173882.2
(22) Date of filing: 02.05.2024
(51) Int. Cl.: H01M 50/209, H01M 50/24, H01M 50/249, H01M 50/262, H01M 50/271

(54) **A BATTERY PACK, A VEHICLE AND A METHOD FOR MANUFACTURING A BATTERY PACK**

(71) Applicant: VOLVO TRUCK CORPORATION, 405 08 Göteborg (SE)
(72) Inventor: Jonsson, Kasper, 417 57 Göteborg (SE); Rout, Dhirendra, 422 54 Göteborg (SE); Irannezhad, Mike, 413 30 Göteborg (SE)
(74) Representative: Kransell & Wennborg KB

(57) **Abstract**

The disclosure relates to a battery pack (1) comprising a plurality of electrochemical battery cells (2), the battery pack further comprising a bottom support member (3), a top cover (4), and a first end cover (5), wherein the first end cover (5) is releasably attached to the top cover (4) via a first outer end attachment interface (A1), wherein the first outer end attachment interface (A1) is formed by a first end cover attachment surface (51) of the first end cover (5) and a first top cover attachment surface (41) of the top cover (4) which face each other along a longitudinal direction (L). The disclosure also relates to a vehicle (100) and a method for manufacturing a battery pack (1).

## Description

### TECHNICAL FIELD

The disclosure relates generally to electrical energy storage systems. In particular aspects, the disclosure relates to a battery pack, a vehicle and a method for manufacturing a battery pack. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure may also be applicable to stationary machinery.

### BACKGROUND

A battery pack typically comprises a plurality of battery cells, i.e., electrochemical battery cells, which are electrically connected in series and/or in parallel. The battery cells may be prismatic battery cells. The battery pack may be installed in an electric or hybrid vehicle and used for driving one or more electric motors. The one or more electric motors may also be used as generators and may for example recharge the cells of the battery pack during regenerative braking of the vehicle.

Due to the electrification trend, such as for vehicles, there is an ongoing strive to develop improved technology relating to battery packs, such as to provide cost-effective configurations which are reliable, robust and/or space efficient.

### SUMMARY

According to a first aspect of the disclosure, a battery pack comprising a plurality of electrochemical battery cells is provided. The battery pack has a longitudinal extension along a longitudinal direction, a width extension along a width direction and a height extension along a height direction. The battery pack further comprises:
- a bottom support member having an extension along the longitudinal direction and an extension along the width direction such that it forms a support surface facing upwardly along the height direction, wherein each electrochemical battery cell of the plurality of electrochemical battery cells is resting on the support surface of the bottom support member,
- a top cover, wherein the top cover extends along the longitudinal direction, has a U-shaped profile, as seen in a sectional view which is perpendicular to the longitudinal direction, and is attached to the bottom support member such that the bottom support member and the top cover form a longitudinally extending receiving space in which the plurality of electrochemical battery cells are accommodated,
- a first end cover covering a first outer end of the longitudinally extending receiving space, as seen in the longitudinal direction,
   wherein the first end cover is releasably attached to the top cover via a first outer end attachment interface, wherein the first outer end attachment interface is formed by a first end cover attachment surface of the first end cover and a first top cover attachment surface of the top cover which face each other along the longitudinal direction,
   wherein the battery pack further comprises a first sealing gasket in the first outer end attachment interface, wherein the first sealing gasket is configured to seal the longitudinally extending receiving space from an external environment. The first aspect of the disclosure may seek to provide an improved battery pack which is cost-effective, reliable, robust and/or space efficient. A technical benefit may include that a large number of battery cells are allowed to be packaged in a compact and safe manner while facilitating e.g. servicing of the battery pack and/or facilitating an assembly procedure of the battery pack. For example, by said configuration, battery cells may be allowed to be directly packaged inside the battery pack without using any battery modules therein. As another example, by releasing the releasably attached first end cover from the battery pack, service may be performed to components provided inside the battery pack. In addition, the first outer end attachment interface with the sealing gasket may result in a reliable interface which is sealed so that any debris, contaminants, water, etc. is prevented from entering the longitudinally extending receiving space in which the plurality of electrochemical battery cells are accommodated. As another example, the releasably attached first end cover may allow the top cover to be attached, e.g. permanently attached, to the bottom support member before the releasably attached first end cover is attached to the top cover. This may facilitate the assembly procedure of the battery pack, e.g. allowing cooling components to protrude out from the battery pack at the first outer end before the releasably attached first end cover is attached to the top cover.

A sealing gasket as disclosed herein may be defined as a static seal which seals between two abutting surfaces.

Optionally in some examples, including in at least one preferred example, the first end cover is further releasably attached to the bottom support member via the first outer end attachment interface, and wherein the first outer end attachment interface is further formed by the first end cover attachment surface and a first end bottom support member surface of the bottom support member which face each other along the longitudinal direction. A technical benefit may include that a more reliable sealed interface is provided, reducing the risk of debris, contaminants, water, etc. from entering the longitudinally extending receiving space.

Optionally in some examples, including in at least one preferred example, at least one of, preferably each one of, the first end cover attachment surface, the first top cover attachment surface and the first end bottom support member surface, is a planar surface with an extension in the height direction and the width direction. A technical benefit may include that a more reliable sealed interface is provided, reducing the risk of debris, contaminants, water, etc. from entering the longitudinally extending receiving space.

Optionally in some examples, including in at least one preferred example, the first sealing gasket extends continuously around a perimeter of the first outer end of the longitudinally extending receiving space, as seen in a sectional plane which is perpendicular to the longitudinal direction. A technical benefit may include that a more reliable sealed interface is provided, reducing the risk of debris, contaminants, water, etc. from entering the longitudinally extending receiving space. By way of example, the first sealing gasket may be a single piece component.

Optionally in some examples, including in at least one preferred example, the first end cover is releasably attached to the top cover and/or the bottom support member by one or more first fasteners. A technical benefit may include a reliable releasable attachment.

Optionally in some examples, including in at least one preferred example, the one or more first fasteners extends in a respective direction along the longitudinal direction, corresponding to an attachment direction of the one or more first fasteners. A technical benefit may include a facilitated attachment and releasing procedure of the first end cover, e.g., allowing a user to more easily attach/release the first end cover from a position outside the first outer end.

Optionally in some examples, including in at least one preferred example, the top cover, on the first top cover attachment surface, comprises one or more longitudinally extending apertures in which the one or more first fasteners are received, and/or wherein the bottom support member, on the first end bottom support member surface, comprises one or more longitudinally extending apertures in which the one or more first fasteners are received. A technical benefit may include a facilitated attachment and releasing procedure of the first end cover.

Optionally in some examples, including in at least one preferred example, the first end cover comprises one or more longitudinally extending through holes in which the one or more first fasteners are received. A technical benefit may include a facilitated attachment and releasing procedure of the first end cover.

Optionally in some examples, including in at least one preferred example, the top cover is attached to the bottom support member via a first longitudinally extending attachment interface on a first lateral side of the longitudinally extending receiving space and via a second longitudinally extending attachment interface on a second lateral side of the longitudinally extending receiving space, the first and second lateral sides being on opposite sides of the longitudinally extending receiving space, as seen in the width direction, wherein preferably the top cover is attached to the bottom support member by welds in the first and second longitudinally extending attachment interfaces. A technical benefit may include that a reliable and robust attachment, such as a permanent attachment, of the top cover to the bottom support member is achieved.

Optionally in some examples, including in at least one preferred example, the battery pack further comprises cooling components for cooling the electrochemical battery cells and/or electronic equipment which is/are accessible by a user at the first outer end when the first end cover is released from the top cover and/or the bottom support member. A technical benefit may include that the position of the cooling components and/or the electronic equipment allows a user to easily access the cooling components and/or the electronic equipment when the first end cover is released from the battery pack.

Optionally in some examples, including in at least one preferred example, the first end cover comprises at least one opening through which at least one cooling conduit and/or one or more electric connections are provided. A technical benefit may include that an assembly procedure of the battery pack may be facilitated by providing the cooling conduit(s) and/or the electric connection(s) through an opening of the releasably attached first end cover.

Optionally in some examples, including in at least one preferred example, the battery pack further comprises at least one crossbeam which defines a transverse wall in the longitudinally extending receiving space which extends in the width direction and the height direction, wherein the crossbeam is attached to the bottom support member and/or to the top cover. A technical benefit may include that a more robust battery pack is achieved, e.g., preventing the top cover from deflecting downwards towards the bottom support member when a load is applied thereon.

Optionally in some examples, including in at least one preferred example, the at least one crossbeam is attached to the bottom support member by a weld. A technical benefit may include a reliable attachment, i.e. a permanent attachment, of the at least one crossbeam to the bottom support member.

Optionally in some examples, including in at least one preferred example, the top cover is attached to the at least one crossbeam by one or more second fasteners, wherein the top cover comprises one or more through holes in which the one or more second fasteners are received. A technical benefit may include a more reliable attachment of the top cover, e.g., reducing the risk of any unwanted deflections of the top cover.

Optionally in some examples, including in at least one preferred example, the battery pack further comprises a second end cover covering a second outer end of the longitudinally extending receiving space, as seen in the longitudinal direction, wherein the second end cover is releasably attached to the top cover via a second outer end attachment interface, wherein the second outer end attachment interface is formed by a second end cover attachment surface of the second end cover and a second top cover attachment surface of the top cover which face each other along the longitudinal direction, wherein the battery pack further comprises a second sealing gasket in the second outer end attachment interface, wherein the second sealing gasket is configured to seal the longitudinally extending receiving space from the external environment. A technical benefit is that a similar, or identical, configuration is also provided on the second outer end, thereby e.g. allowing a user to perform service on the battery pack also from the second outer end. Advantages and benefits of the configuration of the battery pack at the second outer end are analogous to the advantages and benefits of the configuration of the battery pack at the first outer end. Further, it shall be noted that features disclosed herein as being related to the first outer end may additionally or alternatively be applicable for the second outer end.

Optionally in some examples, including in at least one preferred example, the second end cover is further releasably attached to the bottom support member via the second outer end attachment interface, and the second outer end attachment interface is further formed by the second end cover attachment surface and a second end bottom support member surface of the bottom support member which face each other along the longitudinal direction.

Optionally in some examples, including in at least one preferred example, at least one of, preferably each one of, the second end cover attachment surface, the second top cover attachment surface and the second end bottom support member surface, is a planar surface with an extension in the height direction and the width direction.

According to a second aspect of the disclosure, a vehicle comprising the battery according to any one of the examples of the first aspect of the disclosure is provided. The second aspect of the disclosure may seek to provide an improved vehicle with a battery pack which is cost-effective, reliable, robust and/or space efficient. Advantages and technical benefits of the second aspect of the disclosure are analogous to advantages and technical benefits of the first aspect of the disclosure.

According to a third aspect of the disclosure, a method for manufacturing a battery pack according to any one of the examples of the first aspect of the disclosure is provided. The method comprises:
- providing the plurality of electrochemical battery cells on the support surface of the bottom support member,
- attaching the top cover to the bottom support member, and
- attaching the first end cover to the top cover and/or to the bottom support member.
The third aspect of the disclosure may seek to provide an improved method for manufacturing a battery pack. A technical benefit may include that an improved battery pack is provided which is cost-effective, reliable, robust and/or space efficient.

Optionally in some examples, including in at least one preferred example, the first end cover is attached to the top cover and/or to the bottom support member after the top cover is attached to the bottom support member. A technical benefit may include that the assembly procedure of the battery pack is facilitated since it allows cooling components to protrude out from the battery pack at the first outer end before the releasably attached first end cover is attached to the top cover. The method for manufacturing the battery pack may herein also be referred to as an assembly procedure for assembling the battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery pack in a perspective view according to an example.
**FIG. 3** is an exemplary battery pack as shown in FIG. 2 in a partly disassembled state according to an example.
**FIG. 4** is an exemplary battery pack as shown in FIG. 2 in a partly disassembled state according to an example.
**FIG. 5** is an exemplary end portion of a battery pack in a perspective view according to an example.
**FIG. 6** is an exemplary electrochemical battery cell in a perspective view according to an example.
**FIG. 7** is an exemplary battery pack assembly in a perspective view according to an example.
**FIG. 8** is an exemplary flowchart of a method according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

The present disclosure may seek to provide an improved battery pack, such as a battery pack for an at least partly electric vehicle, which battery pack is reliable, robust, space-efficient and has a cost-effective configuration. For example, a compact configuration with high energy density may be achieved. By the configuration of the battery pack as disclosed herein, a scalable configuration may be achieved, in particular in the longitudinal direction, without the need of separate battery modules in the battery pack. Instead, a cell to pack configuration is provided, requiring fewer parts which may result in a less complex assembly procedure of the battery pack. As another example, by the configuration of the battery pack as disclosed herein, servicing of the battery pack may be facilitated and/or the assembly procedure for assembling the battery pack may be facilitated.

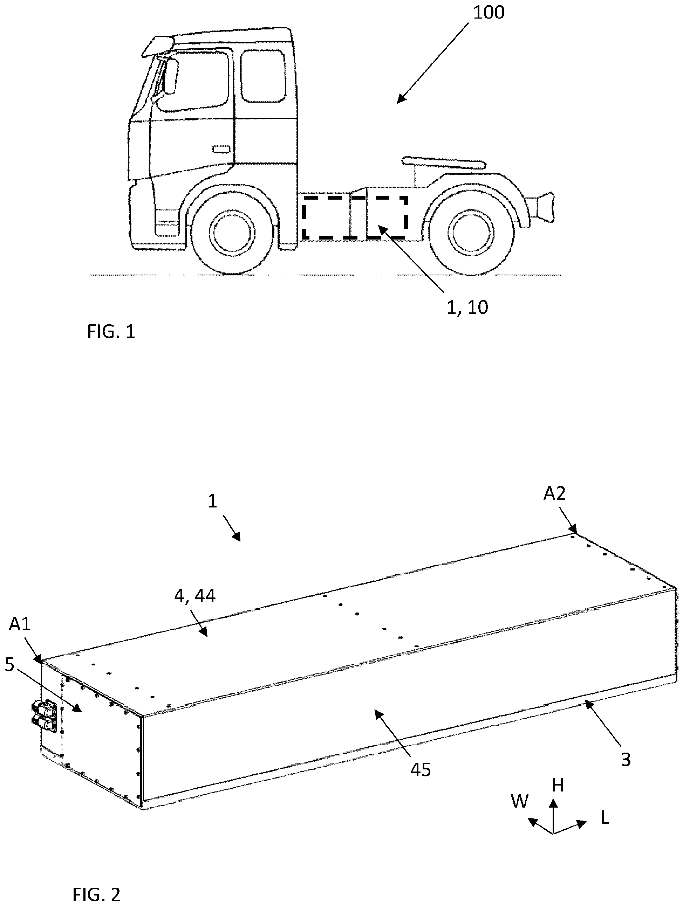

FIG. 1 is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a battery pack 1 according to an example disclosed herein. The battery pack 1 may at least partly be used for driving one or more electric motors (not shown) of the vehicle 100. The vehicle 100 may accordingly be an electric vehicle or a hybrid vehicle, i.e., a vehicle which at least partly uses electric power for propulsion. The battery pack 1 as disclosed herein may also be used in a stationary unit, such as a building and/or any stationary machinery. The battery pack 1 may form part of a battery pack assembly 10 which comprises a plurality of battery packs 1 according to examples disclosed herein, wherein the plurality of battery packs 1 are arranged next to each other.

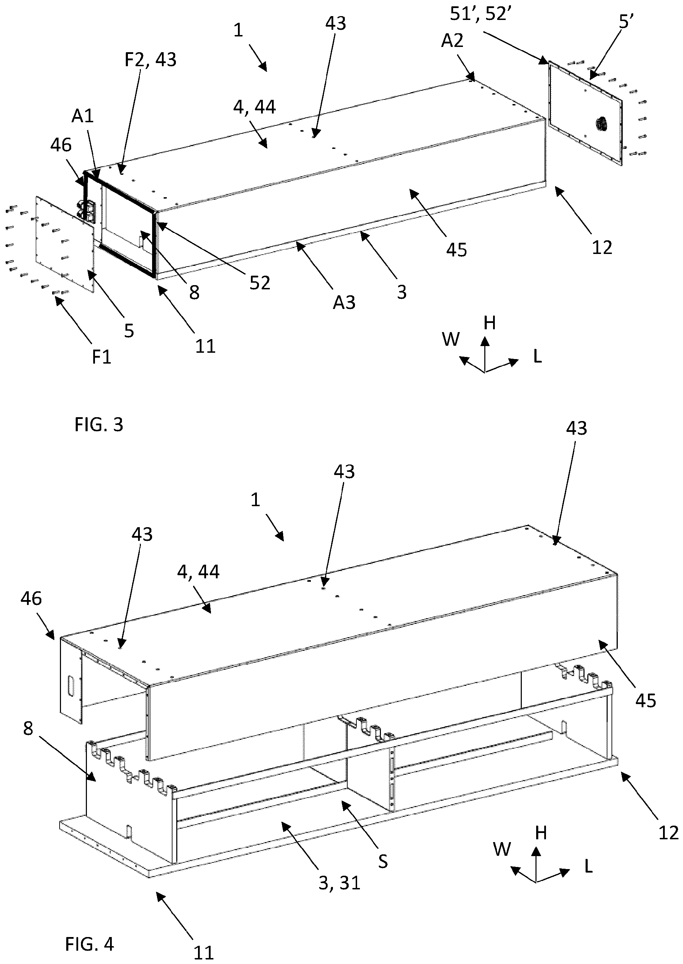

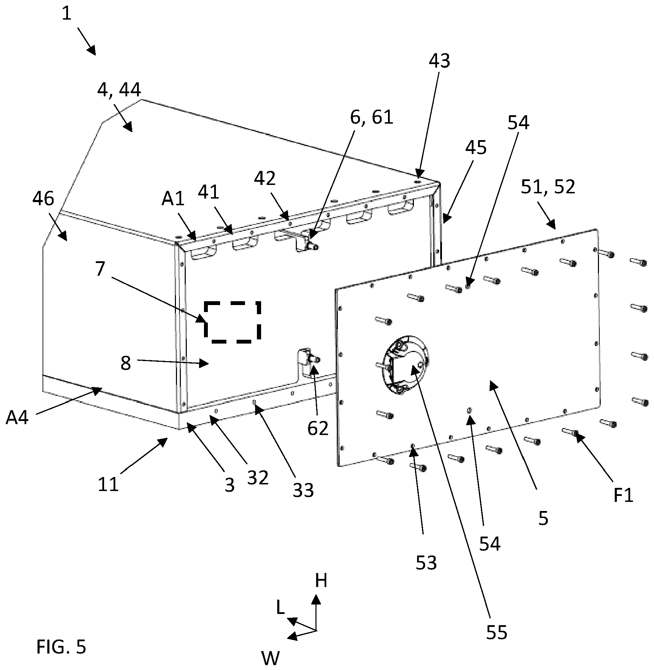

**FIG. 2** depicts a perspective view of a battery pack 1 according to an example when being in an assembled state. **FIG. 3** depicts the battery pack 1 of FIG. 2 when being in a partly disassembled state and **FIG. 4** depicts the battery pack 1 of FIG. 2 when also being in a partly disassembled state. **FIG. 5** is an exemplary end portion of a battery pack 1 in a perspective view according to an example. For instance, the battery pack 1 in Fig. 5 may be the battery pack shown in FIG. 2.

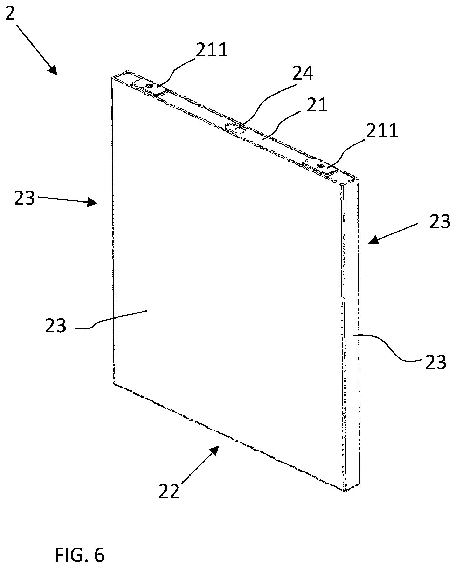

The battery pack 1 comprises a plurality of electrochemical battery cells 2 (not shown in FIGS. 2-5). An example of an electrochemical battery cell 2 is shown in **FIG. 6****.** More specifically, the electrochemical battery cell 2 is preferably a prismatic battery cell, i.e. an electrochemical battery cell with a box-shaped structure. Additionally or alternatively, the electrochemical battery cells may be cylindrical battery cells.

The battery pack 1 has a longitudinal extension along a longitudinal direction L, a width extension along a width direction W and a height extension along a height direction H. The directions L, W and H are perpendicular to each other and may be referred to as a Cartesian coordinate system. When the battery pack 1 is in use, the height direction H may correspond to a vertical direction, e.g., when used in the vehicle 100 and when the vehicle 100 is provided on a flat horizontally extending surface.

The battery pack 1 further comprises a bottom support member 3 having an extension along the longitudinal direction L and an extension along the width direction W such that it forms a support surface 31 (see FIG. 4) facing upwardly along the height direction H, wherein each electrochemical battery cell of the plurality of electrochemical battery cells 2 is resting on the support surface 31 of the bottom support member 3. By resting on the support surface may herein mean that the plurality of electrochemical battery cells 2 are in touching contact with the support surface 31. However, it shall be noted that the plurality of electrochemical battery cells 2 may be resting on the support surface 31 via an additional element provided in-between the plurality of electrochemical battery cells 2 and the support surface 31, such as a cooling plate member (not shown) or any other intermediate member, such as a member for insulation purposes.

The battery pack 1 further comprises a top cover 4, wherein the top cover 4 extends along the longitudinal direction, has a U-shaped profile, as seen in a sectional view which is perpendicular to the longitudinal direction L, and is attached to the bottom support member 3 such that the bottom support member 3 and the top cover 4 form a longitudinally extending receiving space S in which the plurality of electrochemical battery cells 2 are accommodated. In the shown examples, the U-shaped profile is formed by a top wall 44 and two lateral side walls 45, 46. The two lateral side walls 45, 46 are extending downwardly in the height direction H and are perpendicular to the top wall 44. As shown, the top cover 4 and the bottom support member 3 may together form an outer perimeter profile which is square-shaped or rectangular-shaped, as seen in sectional planes along the longitudinal direction L which are perpendicular to the longitudinal direction L. Accordingly, the outer perimeter profile may result in a uniform profile along the longitudinal direction L of the battery pack 1. This may imply a battery pack 1 which is easy to package together with other battery packs, such as to form a battery pack assembly 10.

The battery pack 1 further comprises a first end cover 5 covering a first outer end 11 of the longitudinally extending receiving space S, as seen in the longitudinal direction L.

The first end cover 5 is releasably attached to the top cover 4 via a first outer end attachment interface A1. The first outer end attachment interface A1 is formed by a first end cover attachment surface 51 of the first end cover 5 and a first top cover attachment surface 41 of the top cover 4 which face each other along the longitudinal direction L.

The battery pack 1 further comprises a first sealing gasket 52 in the first outer end attachment interface A1, wherein the first sealing gasket 52 is configured to seal the longitudinally extending receiving space S from an external environment. The sealing gasket 52 is a static seal which seals between at least two abutting surfaces 41, 51. For example, the sealing gasket 52 may be made of polymer, such as rubber or the like. As depicted in e.g. FIG. 3, the sealing gasket 52 may be square-formed or rectangular-formed, e.g., the shape may correspond to the outer perimeter profile of the battery pack 1.

As further indicated in e.g. FIGS. 3 and 5, the first end cover 5 may further be releasably attached to the bottom support member 3 via the first outer end attachment interface A1. To this end, the first outer end attachment interface A1 is further formed by the first end cover attachment surface 51 and a first end bottom support member surface 32 of the bottom support member 3 which face each other along the longitudinal direction L.

Accordingly, the first sealing gasket 52 may as shown in FIG. 3 also be provided in-between the two abutting surfaces 32, 51. Hence, the first sealing gasket 52 may as shown extend continuously around a perimeter of the first outer end 11 of the longitudinally extending receiving space S, as seen in a sectional plane which is perpendicular to the longitudinal direction L. The first sealing gasket 52 has been omitted in FIG. 5 to better illustrate the configuration of the first outer end attachment interface A1.

As further indicated in e.g. FIG. 5, at least one of, preferably each one of, the first end cover attachment surface 51, the first top cover attachment surface 41 and the first end bottom support member surface 32, is preferably a planar surface with an extension in the height direction H and the width direction W. This implies an improved sealed connection, a facilitated assembly procedure, and/or a cost-effective configuration.

As further indicated in e.g. FIGS. 3 and 5, the first end cover 5 may be releasably attached to the top cover 4 and/or the bottom support member 3 by one or more first fasteners F1. The one or more first fasteners F1 may as shown extend in a respective direction along the longitudinal direction L, corresponding to an attachment direction of the one or more first fasteners F1. In the shown examples, the first fasteners F1 are screws, but any other type of fastener may also be used, such as bolts, rivets, studs, etc.

In this respect, the top cover 4, on the first top cover attachment surface 41, may as shown comprise one or more longitudinally extending apertures 42 in which the one or more first fasteners F1 are received. Additionally or alternatively, as also shown, the bottom support member 3 may, on the first end bottom support member surface 32, comprise one or more longitudinally extending apertures 33 in which the one or more first fasteners F1 are received. By way of example, the apertures 42, 33 may be threaded, e.g., threaded before the respective first fastener F1 is received therein.

The first end cover 5 may as shown in e.g. FIGS. 3 and 5 comprise one or more longitudinally extending through holes 53 in which the one or more first fasteners F1 are received.

As indicated in e.g. FIG. 3, the top cover 4 may be attached to the bottom support member 3 via a first longitudinally extending attachment interface A3 on a first lateral side of the longitudinally extending receiving space S and via a second longitudinally extending attachment interface A4 (see FIG. 5) on a second lateral side of the longitudinally extending receiving space S. The first and second lateral sides are on opposite sides of the longitudinally extending receiving space S, as seen in the width direction W. Preferably, the top cover 4 is attached to the bottom support member 3 by welds in the first and second longitudinally extending attachment interfaces A3, A4. Thereby, a permanent attachment is achieved, i.e., meaning herein that the attachment is irreversible and/or that the attachment cannot be released without destroying/damaging the attachment means.

With reference to e.g. FIG. 5, the battery pack 1 may further comprise cooling components 6 for cooling the electrochemical battery cells 2 and/or electronic equipment 7 which is/are accessible by a user at the first outer end 11 when the first end cover 5 is released from the top cover 4 and/or the bottom support member 3.

In the shown example, a cooling inlet 61 and a cooling outlet 62 for coolant is depicted. The cooling inlet 61 and the cooling outlet 62 may be connected to a cooling plate member (not shown). The cooling plate member may be arranged as a wall member which extends in the height direction H and the longitudinal direction L. To this end, the cooling inlet 61 may be arranged above the cooling outlet 62, e.g., along a straight line extending in the height direction H.

In the shown example, the cooling plate member separates the longitudinally extending receiving space S into two sub-spaces with an extension in the longitudinal direction L. The electrochemical battery cells 2 may be provided in each sub-space, e.g., in two parallel rows, wherein the rows are separated by the cooling plate member. This may result in a compact packaging and efficient cooling of the electrochemical battery cells 2 in each row. By way of example, an additional cooling plate member (not shown) may also be provided at an outer lateral end of at least one, preferably each one, of the two sub-spaces, which additional cooling plate member is arranged as a side wall member which extends in the height direction H and the longitudinal direction L. Thereby, further improved cooling may be achieved.

The electronic equipment 7 may be any type of electronic equipment 7 for a battery pack, such as a control unit, contactor(s), fuse(s), etc.

The first end cover 5 may as depicted in e.g. FIG. 5 comprise at least one opening 54 through which at least one cooling conduit and/or one or more electric connections are provided. In the shown example, the cooling inlet and outlet 61, 62 are arranged to extend through the at least one opening 54, i.e., in this example there are two openings 54, one arranged above another, e.g., along a straight line extending in the height direction H.

By the aforementioned configuration, where the first end cover 5 is releasably attached to at least the top cover 4, the assembly procedure of the battery pack 1 will be facilitated, e.g., allowing the internal parts of the battery pack 1, including the cooling parts, to be installed inside the battery pack 1 before attaching the first end cover to at least the top cover 4.

The battery pack 1 may as indicated in e.g. FIGS.3-5 further comprise at least one crossbeam 8 which defines a transverse wall in the longitudinally extending receiving space S which extends in the width direction W and the height direction H, wherein the crossbeam 8 is attached to the bottom support member 3 and/or to the top cover 4. For example, as shown in FIG. 4, there may be several such crossbeams arranged spaced apart from each other in the longitudinal direction L, such as one at each outer end and at least one further crossbeam in-between the outer ends. The crossbeam 8 at e.g. the first outer end 11, may comprise corresponding openings for e.g. the cooling inlet and outlet 61, 62.

The at least one crossbeam 8 may be attached to the bottom support member 3 by a weld. This may result in a more robust configuration. Additionally or alternatively, the top cover 4 may be attached to the at least one crossbeam 8 by one or more second fasteners F2, wherein the top cover 4 comprises one or more through holes 43 in which the one or more second fasteners F2 are received. This may also result in a more robust configuration.

The battery pack 1 may as indicated in e.g. FIG. 3 comprise a second end cover 5' covering a second outer end 12 of the longitudinally extending receiving space S, as seen in the longitudinal direction L. The second end cover 5' is releasably attached to the top cover 4 via a second outer end attachment interface A2, wherein the second outer end attachment interface A2 is formed by a second end cover attachment surface 51' of the second end cover 5' and a second top cover attachment surface of the top cover 4 which face each other along the longitudinal direction L. The battery pack 1 further comprises a second sealing gasket 52' in the second outer end attachment interface A2, wherein the second sealing gasket 52' is configured to seal the longitudinally extending receiving space S from the external environment.

It shall be noted that any feature relating to the first outer end 11 described herein may also be used at the second outer end 12.

For example, as also depicted in FIG. 3, the second end cover 5' may further be releasably attached to the bottom support member 3 via the second outer end attachment interface A2, and wherein the second outer end attachment interface A2 is further formed by the second end cover attachment surface 51' and a second end bottom support member surface of the bottom support member 3 which face each other along the longitudinal direction L.

As another example, at least one of, preferably each one of, the second end cover attachment surface 51', the second top cover attachment surface and the second end bottom support member surface, may be a planar surface with an extension in the height direction H and the width direction W.

With reference to FIG. 6, each prismatic battery cell 2 of the battery pack 1 may comprise a top surface 21 with at least one electrical terminal 211, a bottom surface 22, and four side surfaces 23 connecting the top and bottom surfaces. In the example shown in FIG. 6, the top surface 21 has two electrical terminals, i.e. an anode terminal and a cathode terminal, also known as a plus terminal and minus terminal. As further shown, the prismatic battery cell 2 may comprise a vent opening 24 for allowing gas to be vented out therefrom.

The electrochemical battery cells 2 of the battery pack 1, e.g. according to the type shown in FIG. 6, may be stacked next to each other along the longitudinal direction L in the longitudinally extending space S, such as in one row, or in two or more parallel rows.

The profile of the top cover 4, e.g. the inner profile and/or the outer profile of the top cover 4, may be formed such that it follows the outer periphery profile of the battery stack. Thereby, a compact packaging can be achieved.

Any one of the first and/or second end cover 5, 5' may further comprise a vent opening 55 for allowing gas from the electrochemical battery cells 2 to be vented out from the battery pack 1, i.e. the vent opening 55 of the battery pack 1 may be fluidly connected to the vent opening 24 of each electrochemical battery cell 2.

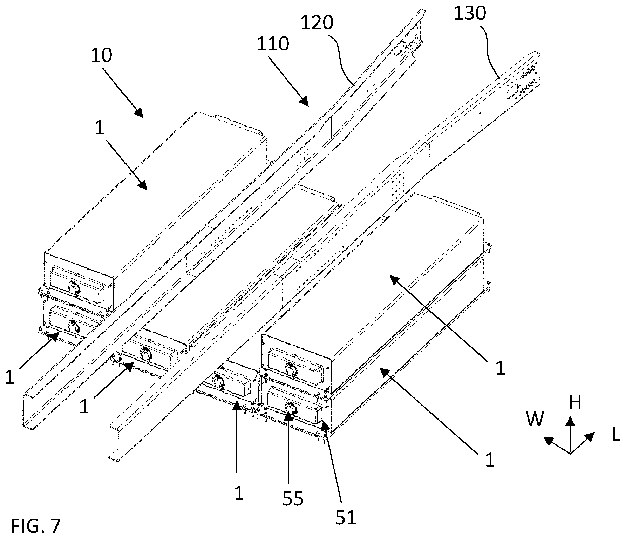

**FIG. 7** is an exemplary battery pack assembly 10 in a perspective view according to an example. The battery pack assembly 10 may for example be the battery pack assembly 10 in FIG. 1.

The battery pack assembly 10 comprises a plurality of battery packs 1 according to any one of the examples disclosed herein. The battery packs 1 may be stacked next to each other and/or on top of each other, and also attached to each other. For example, the battery pack assembly 10 may be attached to a vehicle chassis 110 of the vehicle 100. The vehicle chassis 110 may as shown comprise a first frame rail member 120 and a second frame rail member 130 which both have a main extension along the longitudinal direction L, which corresponds to a longitudinal direction of the vehicle chassis 110. The vehicle chassis 110 may be part of the vehicle 100 shown in FIG. 1. The longitudinal direction L of the vehicle chassis 110 corresponds to a travel direction of the vehicle 100.

In the shown example, there are six battery packs 1. However, the battery pack assembly 10 may comprise more or fewer battery packs 1. The battery packs 1 may as shown be provided in an U-shaped configuration, as shown in a sectional plane which is perpendicular to the longitudinal direction L. Accordingly, the battery pack assembly 10 may extend in the width direction W below the first frame rail member 120 and the second frame rail member 130, and upwardly in the height direction H on each respective lateral side of the first frame rail member 120 and the second frame rail member 130. Other configurations are also conceivable, such as an L-shaped configuration where the battery assembly only extends upwardly in the height direction H on one lateral side of the first frame rail member 120 and the second frame rail member 130.

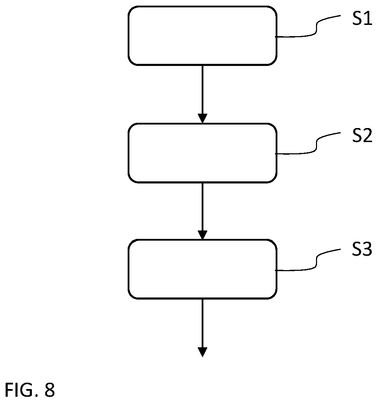

**FIG. 8** is an exemplary flowchart of a method for manufacturing a battery pack 1 according to any one of the examples disclosed herein. The flowchart depicts actions of the method. It shall be noted that the order of the actions may be altered unless explicitly expressed otherwise.

The method comprises:
S1: providing the plurality of electrochemical battery cells 2 on the support surface 31 of the bottom support member 3,
S2: attaching the top cover 4 to the bottom support member 3, and
S3: attaching the first end cover 5 to the top cover 4 and/or to the bottom support member 3.

Preferably, the first end cover 5 is attached to the top cover 4 and/or to the bottom support member 3 after the top cover 4 is attached to the bottom support member 3. In a similar manner, the second end cover 5' is preferably attached to the top cover 4 and/or to the bottom support member 3 after the top cover 4 is attached to the bottom support member 3.

In the following, features and possible feature combinations of the present disclosure are presented as a list of Examples.

Example 1: A battery pack (1) comprising a plurality of electrochemical battery cells (2), the battery pack (1) having a longitudinal extension along a longitudinal direction (L), a width extension along a width direction (W) and a height extension along a height direction (H), the battery pack (1) further comprising:
- a bottom support member (3) having an extension along the longitudinal direction (L) and an extension along the width direction (W) such that it forms a support surface (31) facing upwardly along the height direction (H), wherein each electrochemical battery cell of the plurality of electrochemical battery cells (2) is resting on the support surface (31) of the bottom support member (3),
- a top cover (4), wherein the top cover (4) extends along the longitudinal direction, has a U-shaped profile, as seen in a sectional view which is perpendicular to the longitudinal direction (L), and is attached to the bottom support member (3) such that the bottom support member (3) and the top cover (4) form a longitudinally extending receiving space (S) in which the plurality of electrochemical battery cells (2) are accommodated,
- a first end cover (5) covering a first outer end (11) of the longitudinally extending receiving space (S), as seen in the longitudinal direction (L),
   wherein the first end cover (5) is releasably attached to the top cover (4) via a first outer end attachment interface (A1), wherein the first outer end attachment interface (A1) is formed by a first end cover attachment surface (51) of the first end cover (5) and a first top cover attachment surface (41) of the top cover (4) which face each other along the longitudinal direction (L),
   wherein the battery pack (1) further comprises a first sealing gasket (52) in the first outer end attachment interface (A1), wherein the first sealing gasket (52) is configured to seal the longitudinally extending receiving space (S) from an external environment.

Example 2: The battery pack according to Example 1, wherein the first end cover (5) is further releasably attached to the bottom support member (3) via the first outer end attachment interface (A1), and wherein the first outer end attachment interface (A1) is further formed by the first end cover attachment surface (51) and a first end bottom support member surface (32) of the bottom support member (3) which face each other along the longitudinal direction (L).

Example 3: The battery pack (1) according to any one of the preceding Examples, wherein at least one of, preferably each one of, the first end cover attachment surface (51), the first top cover attachment surface (41) and the first end bottom support member surface (32) according to Example 2, is a planar surface with an extension in the height direction (H) and the width direction (W).

Example 4: The battery pack (1) according to any one of the preceding Examples, wherein the first sealing gasket (52) extends continuously around a perimeter of the first outer end (11) of the longitudinally extending receiving space (S), as seen in a sectional plane which is perpendicular to the longitudinal direction (L).

Example 5: The battery pack (1) according to any one of the preceding Examples, wherein the first end cover (5) is releasably attached to the top cover (4) and/or the bottom support member (3) by one or more first fasteners (F1).

Example 6: The battery pack (1) according to Example 5, wherein the one or more first fasteners (F1) extends in a respective direction along the longitudinal direction (L), corresponding to an attachment direction of the one or more first fasteners (F 1).

Example 7: The battery pack (1) according to Example 6, wherein the top cover (4), on the first top cover attachment surface (41), comprises one or more longitudinally extending apertures (42) in which the one or more first fasteners (F1) are received, and/or wherein the bottom support member (3), on the first end bottom support member surface (32) according to claim 2, comprises one or more longitudinally extending apertures (33) in which the one or more first fasteners (F1) are received.

Example 8: The battery pack (1) according to any one of Examples 6 or 7, wherein the first end cover (5) comprises one or more longitudinally extending through holes (53) in which the one or more first fasteners (F1) are received.

Example 9: The battery pack (1) according to any one of the preceding Examples, wherein the top cover (4) is attached to the bottom support member (3) via a first longitudinally extending attachment interface (A3) on a first lateral side of the longitudinally extending receiving space (S) and via a second longitudinally extending attachment interface (A4) on a second lateral side of the longitudinally extending receiving space (S), the first and second lateral sides being on opposite sides of the longitudinally extending receiving space (S), as seen in the width direction (W), wherein preferably the top cover (4) is attached to the bottom support member (3) by welds in the first and second longitudinally extending attachment interfaces (A3, A4).

Example 10: The battery pack (1) according to any one of the preceding Examples, further comprising cooling components (6) for cooling the electrochemical battery cells and/or electronic equipment (7) which is/are accessible by a user at the first outer end (11) when the first end cover (5) is released from the top cover (4) and/or the bottom support member (3).

Example 11: The battery pack (1) according to any one of the preceding Examples, wherein the first end cover (5) comprises at least one opening (54) through which at least one cooling conduit and/or one or more electric connections are provided.

Example 12: The battery pack (1) according to any one of the preceding Examples, further comprising at least one crossbeam (8) which defines a transverse wall in the longitudinally extending receiving space (S) which extends in the width direction (W) and the height direction (H), wherein the crossbeam (8) is attached to the bottom support member (3) and/or to the top cover (4).

Example 13: The battery pack (1) according to Example 12, wherein the at least one crossbeam (8) is attached to the bottom support member (3) by a weld.

Example 14: The battery pack (1) according to Example 12 or 13, wherein the top cover (4) is attached to the at least one crossbeam (8) by one or more second fasteners (F2), wherein the top cover (4) comprises one or more through holes (43) in which the one or more second fasteners (F2) are received.

Example 15: The battery pack (1) according to any one of the preceding Examples, further comprising a second end cover (5') covering a second outer end (12) of the longitudinally extending receiving space (S), as seen in the longitudinal direction (L), wherein the second end cover (5') is releasably attached to the top cover (4) via a second outer end attachment interface (A2), wherein the second outer end attachment interface (A2) is formed by a second end cover attachment surface (51') of the second end cover (5') and a second top cover attachment surface of the top cover (4) which face each other along the longitudinal direction (L),
wherein the battery pack (1) further comprises a second sealing gasket (52') in the second outer end attachment interface (A2), wherein the second sealing gasket (52') is configured to seal the longitudinally extending receiving space (S) from the external environment.

Example 16: The battery pack (1) according to Example 15, wherein the second end cover (5') is further releasably attached to the bottom support member (3) via the second outer end attachment interface (A2), and wherein the second outer end attachment interface (A2) is further formed by the second end cover attachment surface (51') and a second end bottom support member surface of the bottom support member (3) which face each other along the longitudinal direction (L).

Example 17: The battery pack (1) according to any one of Examples 15 or 16, wherein at least one of, preferably each one of, the second end cover attachment surface (51'), the second top cover attachment surface and the second end bottom support member surface according to Example 16, is a planar surface with an extension in the height direction (H) and the width direction (W).

Example 18: A vehicle (100) comprising the battery pack (1) according to any one of the preceding Examples.

Example 19: A method for manufacturing a battery pack (1) according to any one of Examples 1-17, the method comprising:
- providing (S1) the plurality of electrochemical battery cells (2) on the support surface (31) of the bottom support member (3),
- attaching (S2) the top cover (4) to the bottom support member (3), and
- attaching (S3) the first end cover (5) to the top cover (4) and/or to the bottom support member (3).

Example 20: The method according to Example 19, wherein the first end cover (5) is attached to the top cover (4) and/or to the bottom support member (3) after the top cover (4) is attached to the bottom support member (3).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1) comprising a plurality of electrochemical battery cells (2), the battery pack (1) having a longitudinal extension along a longitudinal direction (L), a width extension along a width direction (W) and a height extension along a height direction (H), the battery pack (1) further comprising:
- a bottom support member (3) having an extension along the longitudinal direction (L) and an extension along the width direction (W) such that it forms a support surface (31) facing upwardly along the height direction (H), wherein each electrochemical battery cell of the plurality of electrochemical battery cells (2) is resting on the support surface (31) of the bottom support member (3),
- a top cover (4), wherein the top cover (4) extends along the longitudinal direction, has a U-shaped profile, as seen in a sectional view which is perpendicular to the longitudinal direction (L), and is attached to the bottom support member (3) such that the bottom support member (3) and the top cover (4) form a longitudinally extending receiving space (S) in which the plurality of electrochemical battery cells (2) are accommodated,
- a first end cover (5) covering a first outer end (11) of the longitudinally extending receiving space (S), as seen in the longitudinal direction (L),
wherein the first end cover (5) is releasably attached to the top cover (4) via a first outer end attachment interface (A1), wherein the first outer end attachment interface (A1) is formed by a first end cover attachment surface (51) of the first end cover (5) and a first top cover attachment surface (41) of the top cover (4) which face each other along the longitudinal direction (L),
wherein the battery pack (1) further comprises a first sealing gasket (52) in the first outer end attachment interface (A1), wherein the first sealing gasket (52) is configured to seal the longitudinally extending receiving space (S) from an external environment.

2. The battery pack according to claim 1, wherein the first end cover (5) is further releasably attached to the bottom support member (3) via the first outer end attachment interface (A1), and wherein the first outer end attachment interface (A1) is further formed by the first end cover attachment surface (51) and a first end bottom support member surface (32) of the bottom support member (3) which face each other along the longitudinal direction (L).

3. The battery pack (1) according to any one of the preceding claims, wherein at least one of, preferably each one of, the first end cover attachment surface (51), the first top cover attachment surface (41) and the first end bottom support member surface (32) according to claim 2, is a planar surface with an extension in the height direction (H) and the width direction (W).

4. The battery pack (1) according to any one of the preceding claims, wherein the first sealing gasket (52) extends continuously around a perimeter of the first outer end (11) of the longitudinally extending receiving space (S), as seen in a sectional plane which is perpendicular to the longitudinal direction (L).

5. The battery pack (1) according to any one of the preceding claims, wherein the first end cover (5) is releasably attached to the top cover (4) and/or the bottom support member (3) by one or more first fasteners (F 1).

6. The battery pack (1) according to claim 5, wherein the one or more first fasteners (F1) extends in a respective direction along the longitudinal direction (L), corresponding to an attachment direction of the one or more first fasteners (F1).

7. The battery pack (1) according to claim 6, wherein the top cover (4), on the first top cover attachment surface (41), comprises one or more longitudinally extending apertures (42) in which the one or more first fasteners (F1) are received, and/or wherein the bottom support member (3), on the first end bottom support member surface (32) according to claim 2, comprises one or more longitudinally extending apertures (33) in which the one or more first fasteners (F1) are received.

8. The battery pack (1) according to any one of claims 6 or 7, wherein the first end cover (5) comprises one or more longitudinally extending through holes (53) in which the one or more first fasteners (F1) are received.

9. The battery pack (1) according to any one of the preceding claims, wherein the top cover (4) is attached to the bottom support member (3) via a first longitudinally extending attachment interface (A3) on a first lateral side of the longitudinally extending receiving space (S) and via a second longitudinally extending attachment interface (A4) on a second lateral side of the longitudinally extending receiving space (S), the first and second lateral sides being on opposite sides of the longitudinally extending receiving space (S), as seen in the width direction (W), wherein preferably the top cover (4) is attached to the bottom support member (3) by welds in the first and second longitudinally extending attachment interfaces (A3, A4).

10. The battery pack (1) according to any one of the preceding claims, further comprising cooling components (6) for cooling the electrochemical battery cells and/or electronic equipment (7) which is/are accessible by a user at the first outer end (11) when the first end cover (5) is released from the top cover (4) and/or the bottom support member (3).

11. The battery pack (1) according to any one of the preceding claims, wherein the first end cover (5) comprises at least one opening (54) through which at least one cooling conduit and/or one or more electric connections are provided.

12. The battery pack (1) according to any one of the preceding claims, further comprising at least one crossbeam (8) which defines a transverse wall in the longitudinally extending receiving space (S) which extends in the width direction (W) and the height direction (H), wherein the crossbeam (8) is attached to the bottom support member (3) and/or to the top cover (4).

13. A vehicle (100) comprising the battery pack (1) according to any one of the preceding claims.

14. A method for manufacturing a battery pack (1) according to any one of claims 1-12, the method comprising:
- providing (S1) the plurality of electrochemical battery cells (2) on the support surface (31) of the bottom support member (3),
- attaching (S2) the top cover (4) to the bottom support member (3), and
- attaching (S3) the first end cover (5) to the top cover (4) and/or to the bottom support member (3).

15. The method according to claim 14, wherein the first end cover (5) is attached to the top cover (4) and/or to the bottom support member (3) after the top cover (4) is attached to the bottom support member (3).
